# EUROPEAN PATENT APPLICATION

(11) **EP 1 997 848 A1**
(43) Date of publication of application: **03.12.2008**
(21) Application number: 07738908.8
(22) Date of filing: 19.03.2007
(51) Int. Cl.: C08J 5/18, B32B 27/00, B65D 65/02, B65D 65/40, C08K 5/13, C08K 5/1565, C08K 5/524, C08L 45/00, G02B 1/04

(54) **NORBORNENE COMPOUND ADDITION POLYMER FILM, PROCESS FOR PRODUCTION THEREOF, AND USE THEREOF**

(30) Priority: 23.03.2006 JP 2006080721; 02.06.2006 JP 2006154794
(71) Applicant: Zeon Corporation, Chiyoda-ku Tokyo 100-8246 (JP)
(72) Inventor: TAKEYAMA, Yoshihisa, Chiyoda-ku, Tokyo 100-8246 (JP); ISHIGURO, Atsushi, Chiyoda-ku, Tokyo 100-8246 (JP); OKUNO, Shingo, Chiyoda-ku, Tokyo 100-8246 (JP)
(74) Representative: Beckmann, Claus
(86) International application number: PCT/JP2007/055463
(87) International publication number: WO 2007/122932

(57) **Abstract**

[PROBLEMS]

To provide a norbornene compound addition polymer film that is excellent in heat resistance, chemical resistance, dimensional stability and the like and favorable for use for optical parts and electric insulating parts.

[MEANS FOR SOLVING PROBLEMS]

The norbornene compound addition polymer film satisfies at least either one of the following: when it is heated from 25°C up to 200°C and then again cooled to 25°C, the dimensional change rate thereof between before heating and after cooling is at most 100 ppm, or the dimensional change rate thereof between before and after dipping in propylene glycol monomethyl ether acetate at 25°C for 1 hour is at most 100 ppm. The method for producing the norbornene compound addition polymer film comprises a step of maintaining the film having a residual solvent content of at most 5,000 ppm of the norbornene compound addition polymer having a glass transition temperature of T°C, at a temperature falling within a range of from the higher temperature of either (T-150)°C or 180°C to T°C .

## Description

### TECHNICAL FIELD

The present invention relates to a norbornene compound addition polymer film excellent in dimensional stability and favorable for use for optical parts and electric insulating parts. More precisely, the invention relates to a norbornene compound addition polymer film that hardly suffers from dimensional changes by fluctuations in ambient temperature or humidity or by treatments with chemicals or the like, and to its production method and its use.

### BACKGROUND ART

A film comprising a norbornene compound addition polymer is excellent in heat resistance, transparency, chemical resistance and low water absorption, and is therefore useful for optical parts, electric insulating parts, electric/electronic parts, sealants for electronic parts, medical equipment, or packaging materials. For example, Non-Patent Reference 1 proposes an electric insulating part comprising a norbornene compound addition polymer film; and Patent Reference 1 discloses a liquid-crystal display substrate material comprising a norbornene compound addition polymer film.
In general, in case where a resin film is used for optical parts or electric insulating parts, it is required to satisfy heat resistance and chemical resistance since an electric wire circuit may be formed on the film surface or the film surface may be brought into contact with a chemical such as a liquid crystal or a resist. A norbornene compound addition polymer is excellent in these properties and is therefore favorably used for the above parts.

Recently, however, advanced functions of electronic appliances have come to require high-density electric wiring and high-definition structuring of display devices for high-speed electric signal transmission. Accordingly, the dimensional stability of films is especially important, and no dimensional changes of films are required even after they are treated at high temperatures, or chemicals are applied thereto or they are dipped in chemicals or the like.

Regarding a method for maintaining the dimensional stability of films, Patent Reference 2 reports that a film for optical materials excellent in optical properties, fracture strength, heat resistance and dimensional stability with a residual solvent content can be obtained without thermal deterioration by dissolving a cyclic olefin-based addition polymer in a solvent (1) capable of dissolving it at 25°C followed by solution-casting, and thereafter bringing it into contact with a solvent (2) which does not dissolve the cyclic olefin-based addition polymer but can uniformly mix with the solvent (1) and has a boiling point of not higher than 150°C under atmospheric pressure.
However, the method requires a complicated process of dipping the once-formed film in the solvent (1) or contacting it with a saturated vapor of the solvent (1) and thereafter drying it in vacuum under heat. In this method, when the film is not dipped in the solvent (1) or not contacted with a saturated vapor of the solvent (1), then the residual solvent content in the obtained film could be reduced nearly by from 2 to 5 % to at most a half, as compared with that in the non-treated film, even though the film is dried in vacuum at a high temperature, and yet, fracture strength of the film lowers and the dimensional change thereof could not be reduced to be still kept large while the total light transmittance thereof greatly lowers, as so demonstrated in the Comparative Examples in the reference; therefore the film is quite useless as an optical material.

Patent Reference 1: JP-A 5-61026
Patent Reference 2: JP-A 2004-59639
Non-Patent Reference 1: Journal of Polymer Science, Part B, Polymer Physics, 1999, Vol. 37, pp. 3003-3010

### DISCLOSURE OF THE INVENTION

### PROBLEMS THAT THE INVENTION IS TO SOLVE

Accordingly, an object of the invention is to provide a norbornene compound addition polymer film excellent in heat resistance, chemical resistance, dimensional stability and the like and favorably usable in a production process for optical parts and electric insulating parts, and to provide a method for producing it, as well as optical parts, electric insulating parts, electric/electronic parts, sealants for electronic parts, medical equipment and packaging materials comprising the norbornene compound addition polymer film.

### MEANS FOR SOLVING THE PROBLEMS

We, the present inventors have assiduously studied for solving the above-mentioned problems and, as a result, have found that, when a film of a norbornene compound addition polymer is processed for a simple operation of a heating treatment at the glass transition temperature of the norbornene compound polymer or at a temperature slightly lower than it without a complicated treatment of dipping in a solvent or the like, then a film thereof can be obtained, which neither warps nor deforms and of which the dimension hardly changes from its original dimension even if it undergoes a step of exposure to a high temperature or a step of contact with a chemical; and on the basis of these findings, we have completed the present invention.

Accordingly, the invention provides a norbornene compound addition polymer film satisfying at least either one of the following: (1) when it is heated from 25°C up to 200°C and then again cooled to 25°C, the dimensional change rate thereof between before heating and after cooling is at most 100 ppm; (2) the dimensional change rate thereof between before and after dipping in propylene glycol monomethyl ether acetate at 25°C for 1 hour is at most 100 ppm.
Preferably, the dimensional change rate of the norbornene compound addition polymer film of the invention, between before and after dipping in water at 25°C for 1 hour is at most 100 ppm.
Preferably, the norbornene compound addition polymer film of the invention has a solvent content of at most 1,000 ppm.
Preferably, the norbornene compound addition polymer film of the invention contains at least one antioxidant selected from the group consisting of phenolic antioxidants, lactone-based antioxidants and phosphorus-containing antioxidants, in an amount of from 0.01 to 10 % by weight of the norbornene compound addition polymer.

According to the invention, there is provided a method for producing the above-mentioned norbornene compound addition polymer film, which comprises, in a process of preparing a norbornene compound addition polymer film, a step of keeping the film having a residual solvent content of at most 5, 000 ppm at a temperature falling within a range of from the higher temperature of either (T-150)°C or 180°C to T°C (T means the glass transition temperature of the norbornene compound addition polymer).
In the method for producing the norbornene compound addition polymer film of the invention, preferably, a cast film of the norbornene compound addition polymer having a residual solvent content of at most 5,000 ppm is heat-treated at a temperature falling within a range of from the higher temperature of either (T-150)°C or 180°C to T°C.
In production of the norbornene compound addition polymer film of the invention, the film may also be produced according to a method of subjecting the film to a thermal history within a range of from the higher temperature of either (T-150)°C or 180°C to T°C in a process of directly preparing the norbornene compound addition polymer film without a step of forming a cast film from a norbornene compound addition polymer.
In production of the norbornene compound addition polymer film of the invention, preferably, a plasticizer is jointly used in preparing the film having a residual solvent content of at most 5,000 ppm.

The norbornene compound addition polymer film of the invention may be further laminated with a transparent conductive film.
Further according to the invention, there are provided optical parts, electric insulating parts, electric/electronic parts, sealants for electronic parts, medical equipment and packaging materials comprising the norbornene compound addition polymer film of the invention.
Further according to the invention, there are provided optical parts comprising a laminate of the norbornene compound addition polymer film of the invention and a transparent substrate having a light transmittance of at least 80 % and a linear expansion coefficient of at most 50 ppm/°C.

### ADVANTAGES OF THE INVENTION

According to the invention, a norbornene compound addition polymer film can be obtained in a simple operation without a solvent treatment or the like of the film. The film hardly undergoes dimensional changes even by heating, dipping in solvent or dipping in water; it has a small solvent content and has excellent optical properties and is hardly colored. Therefore, the norbornene compound addition polymer film of the invention is useful as optical parts, electric insulating parts, electric/electronic parts, sealants for electronic parts, medical equipment and packaging materials.

### BEST MODE FOR CARRYING OUT THE INVENTION

### [Norbornene Compound Addition Polymer]

The norbornene compound addition polymer for use in the norbornene compound addition polymer film of the invention comprises a repetitive structural unit represented by a general formula (1):

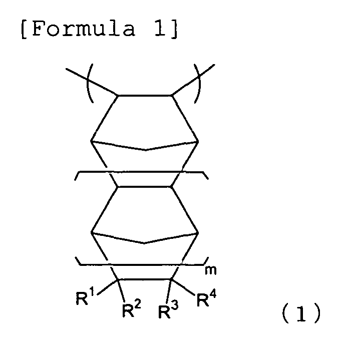

In the formula, R¹ to R⁴ each independently represent a hydrogen atom; a functional group containing a hetero atom of Group 15 or 16 of the Periodic Table or a silicon atom; or a hydrocarbon group having from 1 to 20 carbon atoms and optionally having the functional group. Further, R¹ to R⁴ may bond to each other to form a ring. m indicates 0 or an integer of 1 or more.

The heteroatom of Group 15 or 16 of the Periodic Table that the functional group represented by R¹ to R⁴ contains is not specifically limited, and its examples include an oxygen atom, a nitrogen atom and a sulfur atom.
Specific examples of the functional group include oxygen atom-bearing functional groups such as hydroxy, alkoxy, aryloxy, carbonyl, hydroxycarbonyl, alkoxycarbonyl, aryloxycarbonyl and acid anhydride; nitrogen atom-bearing functional groups such as amino, alkylamino, arylamino and cyano; oxygen atom and nitrogen atom-bearing functional groups such as aminocarbonyl, alkylaminocarbonyl and arylaminocarbonyl; sulfur atom-bearing functional groups such as mercapto, alkylthio, arylthio and thiocarbonyl; silicon atom-bearing functional groups such as silyl, alkylsilyl and arylsilyl; oxygen atom and silicon atom-bearing functional groups such as alkoxysilyl and aryloxysilyl; and the like.

The hydrocarbon group represented by R¹ to R⁴ may be any one having from 1 to 20 carbon atoms and is not specifically limited. It may be an aliphatic hydrocarbon group or an aromatic hydrocarbon group, and may be a saturated group or an unsaturated group. Further, the aliphatic hydrocarbon group may be linear, branched or cyclic.
The hydrocarbon group may have the above-mentioned functional group, and a part of carbon atoms therein may be replace by a hetero atom of Group 15 or 16 of the Periodic Table or a silicon atom.

In formula (1), the ring to be formed by R¹ to R⁴ bonding to each other may be saturated or unsaturated, and may be a monocyclic ring or a condensed ring.

The norbornene compound addition polymer for use in the invention may be obtained by addition polymerization of a norbornene compound shown by a general formula (2): 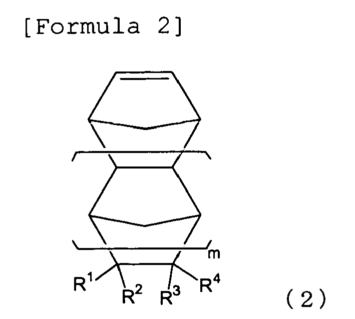 In the formula, R¹ to R⁴ and m are the same as in formula (1).

The norbornene compounds are preferably bicyclo[2.2.1]hept-2-enes of formula (2) where m is 0, and tetracyclo[6.2.1.1^{3,6}.0^{2,7}]dodec-4-enes where m is 1.

The bicyclo[2.2.1]hept-2-enes to be used for production of the norbornene compound addition polymer for use in the invention are not specifically limited, and their specific examples include the following:
Unsubstituted or hydrocarbon substituent-bearing bicyclo[2.2.1]hept-2-enes such as bicyclo[2.2.1]hept-2-ene, 5-methylbicyclo[2.2.1]hept-2-ene, 5-ethylbicyclo[2.2.1]hept-2-ene, 5-butylbicyclo[2.2.1]hept-2-ene, 5-hexylbicyclo[2.2.1]hept-2-ene, 5-decylbicyclo[2.2.1]hept-2-ene, 5-cyclohexylbicyclo[2.2.1]hept-2-ene, 5-cyclopentylbicyclo[2.2.1]hept-2-ene, 5-ethylidenebicyclo[2.2.1]hept-2-ene, 5-vinylbicyclo[2.2.1]hept-2-ene, 5-propenylbicyclo[2.2.1]hept-2-ene, 5-cyclohexenylbicyclo[2.2.1]hept-2-ene, 5-cyclopentenylbicyclo[2.2.1]hept-2-ene, 5-phenylbicyclo[2.2.1]hept-2-ene, 5,6-dimethylbicyclo[2.2.1]hept-2-ene, bicyclo[2.2.1]hepta-2,5-diene, benzoylnorbornadiene, tetracyclo[9.2.1.0^{2,10}.0^{3,8}]tetradeca-3, 5, 7, 12-tetraene (also referred to as "1,4-methano-1,4,4a,9a-tetrahydro-9H-fluorene"), tetracyclo[10.2.1.0^{2,11}.0^{4,9}]pentadeca-4,6,8,13-tetraene (also referred to as "1,4-methano-1,4,4a,9,9a,10-hexahydroanthracene"), dicyclopentadiene, methyldicyclopentadiene and dihydrodicyclopentadiene (also referred to as "tricyclo[5.2.1.0^{2,6}]dec-8-ene");

alkoxycarbonyl group-bearing bicyclo[2.2.1]hept-2-enes such as methyl 5-norbornene-2-carboxylate, ethyl 5-norbornene-2-carboxylate, methyl 2-methyl-5-norbornene-2-carboxylate and ethyl 2-methyl-5-norbornene-2-carboxylate;
hydroxycarbonyl group or acid anhydride group-bearing bicyclo[2.2.1]hept-2-enes such as 5-norbornene-2-carboxylic acid, 5-norbornene-2,3-dicarboxylic acid and 5-norbornene-2,3-dicarboxylic acid anhydride;
hydroxy group-bearing bicyclo[2.2.1]hept-2-enes such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene and 5-methyl-5-(2-hydroxyethoxycarbonyl)-2-norbornene;

hydroxycarbonyl group-bearing bicyclo[2.2.1]hept-2-enes such as 5-norbornene-2-carbaldehyde;
alkoxycarbonyl group and hydroxycarbonyl group-bearing bicyclo[2.2.1]hept-2-enes such as 3-methoxycarbonyl-5-norbornene-2-carboxylic acid;
carbonyloxy group-bearing bicyclo[2.2.1]hept-2-enes such as 5-norbornen-2-yl acetate, 2-methyl-5-norbornen-2-yl acetate, 5-norbornen-2-yl acrylate and 5-norbornen-2-yl methacrylate;
nitrogen atom-bearing functional group-bearing bicyclo[2.2.1]hept-2-enes such as 5-norbornene-2-carbonitrile, 5-norbornene-2-carboxamide and 5-norbornene-2,3-dicarboimide;
silicon atom-bearing functional group-bearing bicyclo[2.2.1]hept-2-enes such as 5-trimethoxysilyl-2-norbornene and 5-triethoxysilyl-2-norbornene.

Tetracyclo[6.2.1.1^{3,6}.0^{2,7}]dodec-4-enes to be used for production of the norbornene compound addition polymer for use in the invention are not specifically limited, and their specific examples include the following:
Unsubstituted or hydrocarbon substituent-bearing tetracyclo[6.2.1.1^{3,6}.0^{2,7}]dodec-4-enes such as tetracyclo[6.2.1.1^{3,6}.0^{2,7}]dodec-4-ene, 9-methyltetracyclo[6.2.1.1^{3,6}.0^{2,7}]dodec-4-ene, 9-ethyltetracyclo[6.2.1.1^{3,6}.0^{2,7}]dodec-4-ene, 9-cyclohexyltetracyclo[6.2.1.1^{3,6}.0^{2,7}]dodec-4-ene, 9-cyclopentyltetracyclo[6.2.1.1^{3,6}.0^{2,7}]dodec-4-ene, 9-methylidenetetracyclo[6.2.1.1^{3,6}.0^{2,7}]dodec-4-ene, 9-ethylidenetetracyclo[6.2.1.1^{3,6}.0^{2,7}]dodec-4-ene, 9-vinyltetracyclo[6.2.1.1^{3,6}.0^{2,7}]dodec-4-ene, 9-propenyltetracyclo[6.2.1.1^{3,6}.0^{2,7}]dodec-4-ene, 9-cyclohexenyltetracyclo[6.2.1.1^{3,6}.0^{2,7}]dodec-4-ene, 9-cyclopentenyltetracyclo[6.2.1.1^{3,6}.0^{2,7}]dodec-4-ene and 9-phenyltetracyclo[6.2.1.1^{3,6}.0^{2,7}]dodec-4-ene;

alkoxycarbonyl group-bearing tetracyclo[6.2.1.1^{3,6}.0^{2,7}]dodec-4-enes such as methyl tetracyclo[6.2.1.1^{3,6}.0^{2,7}]dodec-9-ene-4-carboxylate and methyl 4-methyltetracyclo[6.2.1.1^{3,6}.0^{2,7}]dodec-9-ene-4-carboxylate ;
hydroxycarbonyl group- or acid anhydride group-bearing tetracyclo[6.2.1.1^{3,6}.0^{2,7}]dodec-4-enes such as tetracyclo[6.2.1.1^{3,6}.0^{2,7}]dodec-9-ene-4-carboxylic acid, tetracyclo[6.2.1.1^{3,6}.0^{2,7}]dodec-9-ene-4,5-dicarboxylic acid and tetracyclo[6.2.1.1^{3,6}.0^{2,7}]dodec-9-ene-4,5-dicarboxylic acid anhydride;
hydroxy group-bearing tetracyclo[6.2.1.1^{3,6}.0^{2,7}]dodec-4-enes such as tetracyclo[6.2.1.1^{3,6}.0^{2,7}]dodec-9-ene-4-methanol and tetracyclo[6.2.1.1^{3,6}.0^{2,7}]dodec-9-en-4-ol;

hydroxycarbonyl group-bearing tetracyclo[6.2.1.1^{3,6}.0^{2,7}]dodec-4-enes such as tetracyclo[6.2.1.1^{3,6}.0^{2,7}]dodec-9-ene-4-carbaldehyde;
carbonyloxy group-bearing tetracyclo[6.2.1.1^{3,6}.0^{2,7}]dodec-4-enes such as 9-tetracyclo[6.2.1.1^{3,6}.0^{2,7}]dodec-4-enyl acetate, 9-tetracyclo[6.2.1.1^{3,6}.0^{2,7}]dodec-4-enyl acetate, 9-tetracyclo[6.2.1.1^{3,6}.0^{2,7}]dodec-4-enyl acrylate, and 9-tetracyclo[6.2.1.1^{3,6}.0^{2,7}]dodec-4-enyl methacrylate;
nitrogen atom-bearing functional group-bearing tetracyclo[6.2.1.1^{3,6}.0^{2,7}]dodec-4-enes such as tetracyclo[6.2.1.1^{3,6}.0^{2,7}]dodec-9-ene-4-carbonitrile, tetracyclo[6.2.1.1^{3,6}.0^{2,7}]dodec-9-ene-4-carboxamide and tetracyclo[6.2.1.1^{3,6}.0^{2,7}]dodec-9-ene-4,5-dicarboimide;
silicon atom-bearing functional group-bearing tetracyclo[6.2.1.1^{3,6}.0^{2,7}]dodec-4-enes such as 4-trimethoxysilyltetracyclo[6.2.1.1^{3,6}.0^{2,7}]dodec-9-ene and 4-triethoxysilyltetracyclo[6.2.1.1^{3,6}.0^{2,7}]dodec-9-ene.

These norbornene compound addition polymers may be homopolymers or copolymers of two or more monomers.
They may also be copolymers with a cyclic olefin or any other monomer than norbornene compounds.
The cyclic olefin copolymerizable with a norbornene compound includes monocyclic (di)olefins such as cyclobutene, cyclopentene, cyclohexene, cyclooctene and 1,5-cyclooctadiene.
The other monomer copolymerizable with a norbornene compound includes α-olefins such as ethylene, propylene, 1-butene, 1-hexene and 1-octene; aromatic vinyl compounds such as styrene, α-methylstyrene, p-methylstyrene and p-methoxystyrene; conjugated dienes such as butadiene and isoprene; (meth)acrylate compounds such as methyl acrylate, ethyl acrylate, t-butyl acrylate, 2-hydroxyethyl acrylate, methyl methacrylate, ethyl methacrylate, t-butyl methacrylate and 2-hydroxyethyl methacrylate; and the like.
In the invention, "(meth)acrylate" means acrylate and/or methacrylate.

Preferably, the norbornene compound addition polymer for use for the norbornene compound addition polymer film of the invention has a structural unit derived from unsubstituted or hydrocarbon substituent-bearing bicyclo [2.2.1] hept-2-enes or unsubstituted or hydrocarbon substituent-bearing tetracyclo[6.2.1.1^{3,6}.0^{2,7}]dodec-4-enes, in an amount of at least 70 % of all the repetitive structural units, more preferably at least 80 %, even more preferably at least 85 %, still more preferably at least 95%, from the viewpoint of the dimensional stability and the solubility thereof. Preferably, the hydrocarbon substituent has from 1 to 3 carbon atoms.

Especially preferably, the norbornene compound addition polymer for use for the norbornene compound addition polymer film of the invention is composed of the structural unit of formula (1) alone.
The norbornene compound addition polymer composed of the structural unit of formula (1) alone has high heat resistance, and has a glass transition temperature (Tg) of preferably not lower than 200°C, more preferably not lower than 220°C, even more preferably not lower than 240°C.
In case where the glass transition temperature thereof is lower than 200°C, and when the film is used in some optical parts or electric insulating parts, then its heat resistance may be insufficient. On the other hand, the uppermost limit of the glass transition temperature is not specifically defined, but when it is higher than 400°C, then the polymer may decompose and its Tg may be difficult to measure.

Regarding the molecular weight of the norbornene compound addition polymer for use for the norbornene compound addition polymer film of the invention, its number-average molecular weight (Mn) is preferably from 10,000 to 500,000 in terms of polystyrene, more preferably from 20,000 to 450,000, even more preferably from 50,000 to 400,000. When the number-average molecular weight is too small, then the mechanical properties of the polymer may be poor and it may be difficult to form into films; but when too large, its solution viscosity may be too high and the polymer may be difficult to produce.

The method for producing the norbornene compound addition polymer for use in the invention is not specifically limited.
The polymerization catalyst may be any catalyst for addition polymerization of a norbornene compound, and is not specifically limited; and, for example, it may be a polymerization catalyst comprising a combination of a transition metal catalyst of Group 10 such as nickel or palladium, and a co-catalyst such as an aluminum compound or a boron compound, as described in JP-T 11-505880, WO00/20472 and JP-A 2001-98035.
Above all, norbornene compound addition polymers produced by polymerization by using a palladium atom-bearing polymerization catalyst are preferred as they have excellent mechanical properties.

In case where the norbornene compound addition polymer for use in the invention obtained according to the above-mentioned method has an olefinic unsaturated bond, the olefinic unsaturated bond may be hydrogenated.
The hydrogenation may be attained according to a generally known method, or that is, according to a method of contacting the norbornene compound addition polymer with hydrogen in the presence of a hydrogenation catalyst. As the hydrogenation catalyst, usable are a solid catalyst of a transition metal of Groups 8 to 10, such as nickel, palladium, platinum, cobalt, ruthenium or rhodium, or its compound supported by a porous carrier such as carbon, alumina, silica, silica alumina or diatomaceous earth; or a combination of an organic carboxylate or a β-diketone compound of an element of Groups 4 to 10 such as cobalt, nickel or palladium and an organic aluminum or organic lithium; as well as a homogeneous catalyst of a complex with ruthenium, rhodium, iridium or the like.

The polymer after polymerization or after hydrogenation contains a transition metal or a halogen atom as the residue of the polymerization catalyst, the hydrogenation catalyst or the co-catalyst for them; and depending on the type of the catalyst, it may further contain a phosphorus atom, an aluminum atom, a sulfur atom, and the like.
These catalyst residues may remain in the norbornene compound addition polymer for use for the norbornene compound addition polymer film of the invention, but for the purpose of keeping higher transparency of the film, the sum total of the transition metal atom, the phosphorus atom, the aluminum atom, the sulfur atom and the halogen atom that may be in the polymer is preferably at most 50 ppm as a ratio by weight to the polymer, more preferably at most 40 ppm, even more preferably at most 30 ppm.
The amount of the transition metal atom, the phosphorus atom and the aluminum atom in the polymer may be determined through atomic absorption analysis (ICP-AES). The amount of the sulfur atom and the halogen atom may be determined by firing the polymer, then forming an aqueous solution of sulfate ions or halide ions, and analyzing it through column chromatography.

For removing the catalyst residue from the polymer, employable is a known method; but preferred is a method of contacting the polymer with at least one inorganic compound selected from the group consisting of clay, clay minerals and ion-exchangeable layered inorganic compounds. In general, clay mainly comprises clay minerals. Most clay minerals are ion-exchangeable layered inorganic compounds. The ion-exchangeable layered inorganic compound is a compound having a crystal structure of such that the planes composed of ionic bonding or the like are layered in parallel by weak bonding force to each other, and the ions are exchangeable in the structure. These clay, clay minerals and ion-exchangeable layered inorganic compounds are not limited to natural products, but artificial synthetic products are also favorably usable. Concretely, their examples include clay; clay minerals; ion-bonding compounds having a layered crystal structure such as hexagonal closest packing-type, antimony-type, CdCl₂-type or CdI₂-type ones; and the like.

### [Norbornene Compound Addition Polymer Film]

The norbornene compound addition polymer film of the invention satisfies at least either one of the following: (1) when it is heated from 25°C up to 200°C and then again cooled to 25°C, the dimensional change rate thereof between before heating and after cooling is at most 100 ppm; (2) the dimensional change rate thereof between before and after dipping in propylene glycol monomethyl ether acetate at 25°C for 1 hour is at most 100 ppm.
The dimensional change rate is preferably at most 80 ppm, more preferably at most 70 ppm.
The dimensional change rate is a value determined as follows: In the above case (1), this is the degree of change between the distance between two arbitrary points (referred to as Y⁰) on the film at 25°C before heated up to 200°C, and the distance between the two points (referred to as Y¹) after heated up to 200°C and again cooled to 25°C; and this is obtained as a value of |Y⁰-Y¹|/Y⁰. Concretely, the value is obtained in the same manner as in Examples mentioned hereinunder.
In the case (2), the dimensional change rate is the degree of change between the distance between two arbitrary points (referred to as Y⁰) on the film at 25°C before dipped in propylene glycol monomethyl ether acetate at 25°C, and the distance between the two points (referred to as Y²) after dipped therein for 1 hour; and this is obtained as a value of |Y⁰-Y²|/Y⁰. Concretely, the value is obtained in the same manner as in Examples mentioned hereinunder.
The norbornene compound addition polymer film of the invention has excellent heat resistance, and therefore, even when it is heated at a temperature of at least 200°C but at most the glass transition temperature thereof, its dimensional change rate is at most 100 ppm. Even when the film is heated in an air atmosphere, or in an atmosphere of an inert gas such as nitrogen, or under reduced pressure, it still has the good low dimensional change rate.

Further, the norbornene compound addition polymer film of the invention preferably has a dimensional change rate between before and after dipping in water at 25°C for 1 hour of at most 100 ppm.
The dimensional change rate is more preferably at most 80 ppm, even more preferably at most 70 ppm.
The dimensional change rate is obtained according to the method described in Examples.

The norbornene compound addition polymer film of the invention preferably has a solvent content of at most 1,000 ppm, more preferably at most 500 ppm.
The thickness of the norbornene compound addition polymer film of the invention is generally from 1 to 1,000 µm, preferably from 2 to 500 µm. When its thickness is less than 1 µm, then the film strength may be low and the film may often have faults; but for producing the film thicker than 1, 000 µm, it may take a lot of time for solvent evaporation and removal of the casting solvent.
Strictly, "film" and "sheet" shall be differentiated from each other depending on the thickness thereof; but in the invention, the "film" is a concept that includes both "film" and "sheet.

The norbornene compound addition polymer film of the invention may be produced by keeping, in a process of preparing a norbornene compound addition polymer film, the film having a residual solvent content of at most 5, 000 ppm at a temperature falling within a range of from the higher temperature of either (T-150)°C or 180°C to T°C (T means the glass transition temperature of the norbornene compound addition polymer).

Concretely, the following two methods are shown.
Specifically, in the first method, a cast film of a norbornene compound addition polymer having a residual solvent content of at most 5,000 ppm is heat-treated at a temperature falling within a range of from the higher temperature of either (T-150)°C or 180°C to T°C.
In the second method, a norbornene compound addition polymer film is directly produced from a norbornene compound addition polymer without forming it into a cast film, and in this process, the film is subjected to a thermal history within a range of from the higher temperature of either (T-150)°C or 180°C to T°C.

In the first method, a cast film is first obtained according to a casting method.

### (Casting Method)

The casting method is a method comprising dissolving or dispersing the norbornene compound addition polymer in an organic solvent, then casting the resulting solution (casting solution) onto a support such as a metal drum, a steel belt, a film made from polyester such as polyethylene terephthalate (PET), polyethylene naphthalate (PEN) and the like, or a polytetrafluoroethylene belt, using a die or a coater, thereafter removing the solvent, drying the polymer, and peeling the film from the support.
For the production, also employable is a method comprising applying the solution onto a support by spraying, brushing, roll spin coating, dipping or the like, then drying it to remove the solvent, and peeling the film from the support. Repeatedly coating makes it possible to control the thickness, the surface smoothness, and the like.

The solvent for use in the casting method may be any solvent capable of dissolving or dispersing the norbornene compound addition polymer.
Its specific examples include aliphatic hydrocarbon solvents such as pentane, hexane and heptane; alicyclic hydrocarbon solvents such as cyclopentane, cyclohexane, methylcyclohexane, dimethylcyclohexane, ethylcyclohexane, decahydronaphthalene, bicycloheptane, tricyclodecane, hexahydroindene and cyclooctane; aromatic hydrocarbon solvents such as benzene, toluene and xylene; halogen-containing aliphatic hydrocarbon solvents such as dichloromethane, chloroform and 1,2-dichloroethane; halogen-containing aromatic hydrocarbon solvents such as chlorobenzene and dichlorobenzene; nitrogen-containing solvents such as nitromethane, nitrobenzene and acetonitrile; aliphatic or alicyclic ether solvents such as diethyl ether and tetrahydrofuran; aromatic ether solvents such as anisole and phenetole; and the like.
Of those solvents, preferred are aromatic hydrocarbon solvents, aliphatic hydrocarbon solvents, alicyclic hydrocarbon solvents, ether solvents and halogen-containing hydrocarbon solvents.

Also preferably, a small amount of a solvent not dissolving the norbornene compound addition polymer may be added to the solvent for the purpose of lowering the solution viscosity. The solvent of the type includes cellosolve solvents such as methyl cellosolve, ethyl cellosolve and 1-methoxy-2-propanol; ketone solvents such as diacetone alcohol, acetone, cyclohexanone, methyl ethyl ketone and 4-methyl-2-pentanone; ester solvents such as methyl lactate and ethyl lactate; and alcohol solvents such as 1-pentanol and 1-butanol.

The concentration of the norbornene compound addition polymer in dissolving or dispersing the polymer in the solvent is preferably from 0.1 to 50 % by weight, more preferably from 0.2 to 45 % by weight, even more preferably from 0.5 to 40 % by weight. When the polymer concentration is less than the lowermost limit of the above range, then the film could hardly secure its thickness, and there may occur some problems in that the film could hardly have surface smoothness owing to foaming or the like caused by solvent evaporation. On the other hand, when the concentration is more than the above-mentioned uppermost limit, then the solution viscosity may be too high and the thickness and the surface of the obtained film could hardly be uniform.
The viscosity of the solution at room temperature is generally from 1 to 1,000,000 mPa·s, preferably from 10 to 100,000 mPa·s, more preferably from 100 to 50,000 mPa·s, even more preferably from 1,000 to 40,000 mPa·s.

In the casting method, the film may be formed generally at room temperature; but for lowering the solution viscosity and for increasing the polymer solubility, the polymer solution may be previously heated. The heating temperature may vary depending on the boiling point of the solvent used, but may be from 30°C to 250°C, preferably from 40°C to 200°C.
In the method for producing the norbornene compound addition polymer film of the invention according to the casting method, a cast film of the norbornene compound addition polymer having a residual solvent content of at most 5,000 ppm may be heat-treated at a temperature falling within a range of from the higher temperature of either (T-150)°C or 180°C to T°C; however, in the process of film formation where the residual solvent content in the film is larger than 5, 000 ppm, preferably, the film has no thermal history within the above-mentioned temperature range.

The drying step in the casting method is not specifically limited, and the film may be dried in an ordinary method, for example, according to a method of leading the film to pass through a drying furnace via a large number of rollers. However, when foams are formed during solvent evaporation in the drying step, then the properties of the film may be greatly worsened; and therefore, for evading this, the drying step is preferably a multi-stage step of two or more stages in which the temperature and the air flow rate may be suitably controlled in each stage.

The residual solvent content in the cast film obtained according to the above-mentioned casting method (this may be hereinafter simply referred to as "cast film") may be at most 5,000 ppm, preferably at most 4,000 ppm, more preferably at most 3, 000 ppm, even more preferably at most 2, 000 ppm. When the residual solvent content in the cast film is more than the uppermost limit, then the dimensional change rate of the norbornene compound addition polymer film of the invention obtained by a heat treatment of the cast film in a predetermined temperature range may be large. In addition, the glass transition temperature of the norbornene compound addition polymer may lower owing to the residual solvent therein, and the heat resistance thereof may also lower and the polymer may be deteriorated and colored during the heat treatment step.
The method of making the residual solvent content in the cast film not higher than 5, 000 ppm is not specifically limited; but concretely, it may include vacuum drying, or drying in a flow of air, nitrogen or the like.

Next, the obtained norbornene compound addition polymer film (cast film) is heat-treated at a temperature falling within a range of from the higher temperature of either (T-150)°C or 180°C to T°C.
The treatment temperature is preferably within a range of from the higher temperature of either (T-120)°C or 180°C to T°C, more preferably from the higher temperature of either (T-100)°C or 180°C to T°C.
The heat treatment time may be set depending on the production condition and the thickness of the film, falling within a range of from 1 second to 100 hours, preferably from 1 minute to 10 hours.
The heating atmosphere may be an air atmosphere, or an inert gas atmosphere of, for example, nitrogen, or under reduced pressure; but preferably, it is an inert gas atmosphere or under reduced pressure.

The second production method for the norbornene compound addition polymer film comprises a step of directly preparing a norbornene compound addition polymer film from a norbornene compound addition polymer without a step of forming a cast film from the norbornene compound addition polymer, in which the film is subjected to a thermal history within a range of from the higher temperature of either (T-150)°C or 180°C to T°C. The time to be taken for the thermal history of the film may be the same as that for the case of the above-mentioned cast film.
The direct film formation method may be, for example, an extrusion method or a press molding method.

In preparing the film having a residual solvent content of at most 5,000 ppm, a plasticizer is preferably added thereto. When the film contains a plasticizer, then the residual solvent therein may be easy to remove with the result that the residual solvent in the film could be reduced to at most 5,000 ppm at a relatively low temperature within a short period of time.
The plasticizer is an organic compound having a boiling point higher than 200°C and preferably liquid at room temperature; and the solvent is an organic compound having a boiling point not higher than 200°C and preferably liquid at room temperature.
The method of using a plasticizer is favorably applied to the above-mentioned " casting method " from the standpoint that the plasticizer may be uniformly dispersed in the film with ease.
In the " casting method ", a plasticizer may be added to and dissolved in a solution prepared by dissolving or dispersing a norbornene compound addition polymer in an organic solvent (casting solution), and in the same manner as above, the casting solution may be applied onto a metal drum or the like, using a die or a coater, and thereafter the solvent is removed, the polymer is dried, and the film is peeled from the support. In that manner, a cast film with the plasticizer uniformly dispersed therein may be obtained, and the residual solvent in the cast film may be more readily removed than that in the plasticizer-free film.
In the above-mentioned second method, for example, a plasticizer may be added via an inlet port of an extrusion machine for the starting material (norbornene compound addition polymer and others).
The amount of the plasticizer to be used is preferably from 0.1 to 30 parts by weight relative to 100 parts by weight of the norbornene compound addition polymer, more preferably from 1 to 20 parts by weight, even more preferably from 2 to 10 parts by weight. When the amount of the plasticizer is too small, then the residual solvent may be not easy to remove; but when the amount of the plasticizer is too large, then it may bleed out.

Specific examples of the plasticizer include aliphatic dibasic acid ester plasticizers such as dibutyl malonate, diisopropyl malonate, dimethyl adipate, dibutyl adipate, diisopropyl adipate, diisobutyl adipate, bis(2-ethylhexyl) adipate, diisononyl adipate, dioctyl adipate, diisodecyl adipate, bis(butyl-diglycol) adipate, bis(2-ethylhexyl) azelate, dimethyl sebacate, dibutyl sebacate, bis (2-ethylhexyl) sebacate, dioctyl sebacate, diethyl succinate, diisopropyl succinate and dibutyl succinate; phthalate plasticizers such as dimethyl phthalate, diethyl phthalate, diisopropyl phthalate, dibutyl phthalate, bis(2-ethylhexyl) phthalate, di-n-octyl phthalate, diisodecyl phthalate, butylbenzyl phthalate, di-n-nonyl phthalate, diisononyl phthalate and ethylphthalylethyl glycolate; trimellitate plasticizers such as tris(2-ethylhexyl) trimellitate and trioctyl trimellitate; orthophosphate plasticizers such as trimethyl phosphate, triethyl phosphate, tributyl phosphate, tris(2-ethylhexyl) phosphate, tris(butoxyethyl) phosphate, triphenyl phosphate, tricresyl phosphate, trixylenyl phosphate, cresyldiphenyl phosphate and 2-ethylhexyldiphenyl phosphate; acetate plasticizers such as glyceryl triacetate and 2-ethylhexyl acetate; polyester/epoxidated ester plasticizers such as poly(1,3-butanediol adipate) and epoxidated soybean oil; ricinoleate plasticizers such as methylacetyl ricinoleate; sulfonamide plasticizers such as N-butylbenzenesulfonamide; and the like. Of those, preferred are aliphatic dibasic acid ester plasticizers and phthalate plasticizers from the viewpoint of their compatibility with norbornene compound addition polymer. When the compatibility of the plasticizer with norbornene compound addition polymer is low, then the light transmittance of the film may be low and the haze thereof may increase, and therefore the optical properties of the film may worsen.

Thus obtained, the norbornene compound addition polymer film of the invention has a low solvent content of preferably at most 1,000 ppm, more preferably at most 500 ppm, and it exhibits excellent total light transmittance and mechanical strength and has a small dimensional change rate.
The reason why the norbornene compound addition polymer film of the invention has a small dimensional change rate may be presumed as follows: The film is prepared at the above-mentioned high temperature near to the glass transition temperature of the polymer, but the solvent may vaporize little during the film preparation; and therefore the heat resistance of the film may not be deteriorated and the residual stress thereof could be relaxed.

Preferably, the norbornene compound addition polymer film of the invention contains an antioxidant. The antioxidant used may enhance the stability of the film at high temperatures.
The antioxidant is not specifically limited, but is preferably at least one selected from the group consisting of phenolic antioxidants, lactone-based antioxidants and phosphorus-containing antioxidants. For increasing the antioxidative effect thereof, at least two of these are preferably used as combined.

Specific examples of the phenolic antioxidants include 2,6-di-t-butyl-4-methylphenol, 4,4'-thiobis-(6-t-butyl-3-methylphenol), 1,1'-bis(4-hydroxyphenyl)cyclohexane, 2,2'-methylenebis(4-ethyl-6-t-butylphenol), pentaerythritol tetrakis[3-(3,5-di-t-butyl-4-hydroxyphenyl)propionate], octadecyl 3-(3,5-di-t-butyl-4-hydroxyphenyl)propionate, 3,3',3",5,5',5"-hexa-t-butyl-a,a',a"-(mesitylene-2,4,6-tri yl) tri-p-cresol, 1,3,5-tris(3,5-di-t-butyl-4-hydroxybenzyl)-1,3,5-triazine-2,4,6(1H,3H,5H)-trione, and the like.

Specific examples of the phosphorus-containing antioxidants include tris(4-methoxy-3,5-diphenyl) phosphite, tris(nonylphenyl) phosphite, tris(2,4-di-t-butylphenyl) phosphite, tris[2-[[2,4,8,10-tetra-t-butyldibenzo[d,f][1,3,2]dioxapho sphephin-6-yl]oxy]ethyl]amine, and the like.
Specific examples of the lactone-based antioxidants include a reaction product of 3-hydroxy-5,7-di-t-butyl-furan-2-one and o-xylene, and the like.
The amount of the antioxidant to be added is not specifically limited, but is preferably from 0.01 to 10 % by weight of the norbornene compound addition polymer, more preferably from 0.05 to 5 % by weight.

Also preferably, a heat-resistant processing stabilizer, a UV absorbent, a light stabilizer and other stabilizers and the like may be added to the norbornene compound addition polymer film of the invention.
Examples of the heat-resistant processing stabilizer include hydroxylamine-based heat-resistant processing stabilizers; sulfur-containing heat-resistant processing stabilizers such as didodecyl 3,3'-thiodipropionate and dioctadecyl 3,3'-thiodipropionate; and the like.
Examples of the UV absorbent include benzotriazole-based UV absorbents, triazine-based UV absorbents, benzophenone-based UV absorbents, and the like.
Examples of the light stabilizer include benzoate-based light stabilizers, hindered amine-based light stabilizers, and the like.

If desired, various additives may be incorporated with the norbornene compound addition polymer film of the invention.
The additives include an inorganic filler, an organic filler, a processing stabilizer, an antistatic agent, a near-IR absorbent, a colorant such as a dye or a pigment, a phosphor, a lubricant, a flame retardant, a crosslinking agent, and the like.
For adding the antioxidant and other additives to the norbornene compound addition polymer film, employable is any method capable of uniformly dissolving or dispersing the antioxidant and other additives in the film of the invention. Preferred is a method that comprises dissolving or dispersing an antioxidant and other additives in a casting solution of norbornene compound addition polymer and casting the solution into a film, as the method is simple.

The norbornene compound addition polymer film of the invention has a total light transmittance of at least 70 %, preferably at least 80 %, more preferably at least 85 %, and therefore, it is favorably used for optical materials and parts for display devices.

The norbornene compound addition polymer film may be formed into a composite film with a woven fabric or a nonwoven fabric. The composite film may be produced by infiltrating a solution of norbornene compound addition polymer into a woven fabric or nonwoven fabric such as glass cloth, then drying it, and thereafter heat-treating it at a temperature falling within a range of from the higher temperature of either (T-150°C) or 180°C to T°C.
Further, any other thermoplastic resin may be incorporated into the norbornene compound addition polymer film. The film of the mixture may be produced according to a casting method where the other thermoplastic resin is mixed in the casting solution, or according to a melt extrusion method of using a melt extruder or the like. After that, the film may be heat-treated at a temperature falling within a range of from the higher temperature of either (T-150)°C or 180°C to T°C.

### [Transparent conductive film-laminated film]

The norbornene compound addition polymer film of the invention may be one laminated with a transparent conductive film (hereinafter this may be referred to as "transparent conductive film-laminated film").
As the material for forming the transparent conductive film layer (transparent conductive film), generally used are metals such as Sn, In, Ti, Pb, Au, Pt and Ag; or their oxides and the like, for example, indium tin oxide (ITO), aluminum oxide, silicon oxide, titanium oxide, zinc oxide, tungsten oxide, aluminum nitride, silicon nitride, titanium nitride, cadmium sulfide, zinc sulfide and zinc selenide. A coating film of such a simple metal may be formed on a substrate, optionally oxidized, to form a transparent conductive film layer. At the beginning of film formation, a metal oxide layer may be formed by adhesion; but at the beginning of film formation, a coating layer of a simple metal or a lower metal oxide may be formed, and thereafter this may be processed for oxidation such as heating oxidation, anodic oxidation or liquid-phase oxidation for clarification to be a transparent film.

The transparent conductive film layer may be formed by adhering a sheet, film or the like with any other transparent conductive film layer, film or the like to the norbornene compound addition polymer film; or it may be directly formed on the norbornene compound addition polymer film by a plasma polymerization method, a sputtering method, a vacuum vapor deposition method, a metal-plating or ion-plating method, a spraying method, an electrolytic deposition method or the like. The thickness of the transparent conductive film layer may be suitably determined depending on the desired properties, and is not specifically limited; but in general, it may be from 10 to 10,000 angstroms, preferably from 50 to 5, 000 angstroms.

In case where a transparent conductive film layer is directly formed on the norbornene compound addition polymer film of the invention, an adhesive layer and an anchor coat layer may be formed, if desired, between the norbornene compound addition polymer film and the transparent conductive film layer. The adhesive layer may be formed, using a heat-resistant resin such as an epoxy resin, polyimide, polybutadiene, a phenolic resin or polyether ether ketone. The anchor coat layer may be formed by a known curing method of, for example, UV curing or thermal curing, using an anchor coat agent containing an acrylic prepolymer such as epoxy diacrylate, urethane diacrylate, polyester diacrylate or the like.

In the transparent conductive film-laminated film of the invention, an adhesive layer may be provided between the norbornene compound addition polymer film and the transparent conductive film for the purpose of enhancing the film smoothness and enhancing the adhesiveness to the transparent conductive film. The adhesive layer may be formed by application of a resin varnish followed by drying it for solvent removal. In this case, preferred is a varnish containing a resin having film formability after solvent removal, namely, a solid resin, from the viewpoint of uniform coating. Specific examples of the resin for this include photocurable resins, for example, so-called acrylic prepolymers such as epoxy diacrylate, urethane diacrylate or polyester diacrylate; o-cresol-novolak or bisphenol-type epoxy-based, urethane-based, acryl-based, urea-based, melamine-based or unsaturated polyester-based thermosetting resins; electron beam-curable resins; and the like. Of those, preferred are photocurable resins in view of the productivity and the cost thereof.
For forming the curable resin coating film, there are known a gravure coating method, a reverse roll coating method, a kiss roll coating method and the like; and any of those methods are employable herein.

The transparent conductive film-laminated film of the invention may have a gas-barrier layer on the side opposite to the transparent conductive film. The gas-barrier layer may be formed of an inorganic material or an organic material. Usable inorganic materials include silicon oxide, aluminum oxide, indium oxide, and the like; and organic materials include polyvinyl alcohol, an ethylene/vinyl alcohol copolymer, polyamide, and the like.
The thickness of the gas-barrier layer is preferably from 100 to 2,000 angstroms when it is formed of an inorganic material, and from 500 to 10,000 angstroms when formed of an organic material.
The inorganic material may be formed into a film according to a known method such as a sputtering method, an ion-plating method, a resistance heating method or a CVD method. The organic material may be formed into a film by dissolving it in a solvent and applying and drying it according to the above-mentioned coating method.
An adhesive layer may be provided between the film and the gas-barrier layer.
Further, a protective coat layer may be laminated on the gas-barrier layer for protecting it. The protective coat layer is preferably formed according to the same method as that for the above-mentioned adhesive layer.

### [Optical Parts]

The norbornene compound addition polymer film of the invention is favorably used for optical parts, for example, for color filter substrates as well as light-guiding plates, protective films, polarizing films, retardation films, touch panels, transparent electrode substrates, optical recording substrates for CD, MD, DVD and the like, TFT substrates, liquid-crystal display substrates, organic EL display substrates, and also light transmission waveguides, optical device sealants, and the like.
Above all, it is favorably used for parts of display devices, concretely color filter substrates, light-guiding plates, protective films, polarizing films, retardation films, touch panels, transparent electrode substrates, TFT substrates, liquid-crystal display substrates, organic EL display substrates, and the like.

### [Color Filter]

A color filter may be obtained by laminating a color filter layer on a color filter substrate comprising the norbornene compound addition polymer film of the invention or the transparent conductive film-laminated film of the invention. For the lamination, employable is any known method such as a pigment dispersion method, a dyeing method, an electrodeposition method, a printing method, a transfer method, or the like.
For example, in the pigment dispersion method, a black matrix is formed of a metallic light-shielding film of a chromium metal or a chromium compound such as chromium oxide or chromium nitride, a nickel/tungsten alloy or the like, on a color filter substrate by a sputtering method or a vacuum vapor deposition method, and then a photosensitive resin composition with a red pigment dispersed therein (color resist) is applied onto the entire surface by a spin coating method, a wire bar method, a flow coating method, a die coating method, a roll coating method, a spray-coating method or the like, exposed to light via a mask, and developed after the exposure to thereby form a red pixel. According to the same process, blue and green pixels are formed by coating, exposure to light and development, thereby forming the three color pixels. The order of forming the three color pixels is not specifically defined, and may be determined in any desired manner. In case where the black matrix segment between the pixels is in a recess, then the surface may be coated with a transparent resin such as an epoxy resin or an acrylic resin to form a protective film thereon. On forming the black matrix, the above-mentioned pigment dispersion method may also be employed. Concretely, a photosensitive resin with a black pigment dispersed therein (black resist) may be applied for coating, exposed to light and developed.

Regarding the constitutive components of the color resists and the black resist as well as the methods for their application for coating, exposure to light and development, for example, herein employable are the constitutive components and the methods described in JP-A 2004-56151, 2004-347831, etc. For the printing method, employable is any known method, and for example, the inks and the printing methods described in JP-A 6-347637, 11-326622 and 2004-333971 are usable.
The norbornene compound addition polymer film of the invention has high resistance to chemicals such as resists, inks and developers, and therefore, in the color filter lamination process, the substrate is neither deformed nor cracked.

If desired, the transparent substrate and the black matrix substrate may be processed for a corona discharge treatment, an ozone treatment or a thin film formation treatment thereon with various resins such as a silane coupling agent or a urethane resin, for improving the surface properties such as the adhesiveness thereof. In case where a thin film is formed of various resins, its thickness may be generally within a range of from 0.01 to 10 µm, preferably from 0.05 to 5 µm.

The color filter may be used as a color filter for liquid-crystal display devices; and further, it may also be used as a part of color displays, liquid-crystal display devices, and the like.

The optical part of the invention may be formed of the norbornene compound addition polymer film of the invention laminated with a transparent substrate having a light transmittance of at least 80 %, preferably at least 85 %, and a linear expansion coefficient of at most 50 ppm/°C, preferably at most 40 ppm/°C. Thus laminated with the transparent substrate, the color filter and the liquid-crystal display device substrate may be prevented from deformation, and the substrate may be prevented from being expanded or shrunk by temperature changes.

The transparent substrate to be used may be any one having a light transmittance of at least 80 % and a linear expansion coefficient of at most 50 ppm/°C. Its specific examples include glass substrates such as optical white glass, soda glass and thin-film glass; resin substrates such as polyethylene terephthalate, polyethylene naphthalate and polyimide; and the like. Of those, especially preferred are glass substrates such as optical white glass and thin-film glass.
For improving the surface properties such as the adhesiveness of the norbornene compound addition polymer film to the transparent substrate, if desired, the surfaces of the two may be processed for a corona discharge treatment, an ozone treatment or a plasma treatment, or a thin film of various resins such as a silane coupling agent or a urethane resin may be formed on the surfaces of the two. When a thin film of various resins is formed, then its thickness may be generally within a range of from 0.01 to 10 µm, preferably from 0.05 to 5 µm.

For enhancing the adhesiveness between the norbornene compound addition polymer film and the transparent substrate, an adhesive layer may be provided between the two. The adhesion may be attained by application of a resin varnish followed by drying it to remove the solvent. In this case, the resin is preferably one having film formability after solvent removal, namely, a varnish with a solid resin added thereto from the viewpoint of uniform coating.
Specific examples of the resin of the type include photocurable resins, for example, so-called acrylic prepolymers such as epoxy diacrylate, urethane diacrylate or polyester diacrylate; o-cresol-novolak or bisphenol-type epoxy-based, urethane-based, acryl-based, urea-based, melamine-based or unsaturated polyester-based thermosetting resins; electron beam-curable resins; cyclic olefin resins or their modified derivatives; cyclic polyisoprene resins or their modified derivatives; and the like.

For forming the thin resin film, there are known a gravure coating method, a reverse roll coating method, a kiss roll coating method and the like; and any one of those methods is employable herein.

The norbornene compound addition polymer film of the invention is usable not only for optical parts but also for electric insulating parts, electric/electronic parts, sealants for electronic parts, medical equipment, and packaging materials.

### [Electric Insulating Parts]

The norbornene compound addition polymer film of the invention has excellent heat resistance and electric properties and suffers from little dimensional changes in a high-temperature treatment or a chemical treatment, and therefore it is most favorable for electric insulating parts.
The electric insulating parts include covering materials for electric wires and cables; insulating materials for OA appliances such as computers, printers and duplicators; insulating parts of flexible printed boards; and the like. In particular, the film is favorable for flexible printed boards.

### [Electric/Electronic Parts]

As electric/electronic parts, the film may be used for containers, trays, carrier tapes, separation films, washing chambers, pipes and tubes, as well as sealants for semiconductor devices, sealants for integrated circuits, overcoating materials, and the like.

### [Medical Equipment]

As medical equipment, the film may be used for containers for chemicals, infusion bags, sample containers, sterilization containers, tubes, and the like.

### EXAMPLES

The invention is described more concretely with reference to the following Examples and Comparative Examples. The invention should not be limited to these Examples. In Examples, part and % are all by weight, unless otherwise specifically indicated.
In Examples and Comparative Examples, the samples were tested and evaluated according to the methods mentioned below.

(1) Weight-Average Molecular Weight (Mw) and Number-Average Molecular Weight (Mn) of Polymer:
   Measured in terms of polystyrene through gel permeation chromatography (GPC) using tetrahydrofuran or chloroform as a solvent.
(2) Copolymerization Ratio of Polymer:
   Determined through ¹H-NMR analysis.
(3) Glass Transition Temperature (Tg):
   Determined as the temperature at the inflection point of the storage modulus E' measured in kinematic viscoelastometry. In kinematic viscoelastometry, used is DMS6100 (by Seiko Instruments). The frequency is 10 Hz; the heating rate is 5°C/min; the excitation mode is a single waveform; the excitation amplitude is 5. 0 µm. Using the device, the temperature at the inflection point of the storage modulus E' is measured.
(4) Residual Solvent Content in Film before a heat treatment:
   The residual solvent content in film before a heat treatment is determined as follows: A non-heat-treated film is dissolved in a solvent other than the solvent used in preparing the film before the heat treatment, and then quantitatively analyzed through gas chromatography.
(5) Solvent Content in Norbornene Compound Addition Polymer Film:
   A norbornene compound addition polymer film is dissolved in a solvent other than the solvent used in preparing the norbornene compound addition polymer film, and then quantitatively analyzed through gas chromatography.

(6) Dimensional Change Rate of Norbornene Compound Addition Polymer Film between before and after heating at 200°C:
   A plurality of marks are put on the film having a thickness of 100 µm and a length and a width of 100 mm each; and the film is heated in air at 200°C for 1 hour. The difference between the mark-to-mark distances at 25°C before and after the heat treatment is averaged to determine the dimensional change rate.
(7) Dimensional Change Rate of Norbornene Compound Addition Polymer Film between before and after dipping in propylene glycol monomethyl ether acetate (PGMEA):
   A plurality of marks is put on the film having a thickness of 100 µm and a length and a width of 100 mm each. The film is dipped in propylene glycol monomethyl ether acetate (PGMEA) at 25°C for 1 hour and then dried in vacuum at 100°C for 1 hour to remove PGMEA adhering to the film. The difference between the mark-to-mark distances at 25°C before and after dipping in PGMEA is averaged to determine the dimensional change rate. (8) Dimensional Change Rate of Norbornene Compound Addition Polymer Film between before and after dipping in water:
   A plurality of marks are put on the norbornene compound addition polymer film having a thickness of 100 µm and a length and a width of 100 mm each. The film is dipped in water at 25°C for 1 hour and then dried in vacuum at 100°C for 1 hour to remove water adhering to the norbornene compound addition polymer film. The difference between the mark-to-mark distances at 25°C before and after dipping in water is averaged to determine the dimensional change rate.
(9) Total Light Transmittance of Norbornene Compound Addition Polymer Film:
   The norbornene compound addition polymer film having a thickness of 100 µm is analyzed with a UV-visible spectrometer (JASCO's trade name, "V-550") within a wavelength range of from 400 to 700 nm.

### (Reference Example 1)

### (Synthesis of Norbornene Compound Addition Polymer (a))

0.77 part of (allyl)palladium(tricyclohexylphosphine) chloride and 1.14 parts of lithium tetrakis(pentafluorophenyl)borate were put into a glass reactor with the inside thereof replaced with nitrogen, and then 2 parts of toluene was successively added to give a catalyst liquid.
Next, 1,650 parts of bicyclo[2.2.1]hept-2-ene (NB; molecular weight = 94), 915 parts of 5-ethylbicyclo[2.2.1]hept-2-ene (EtNB; molecular weight = 122), 1, 300 parts of styrene as a molecular weight-controlling agent, and 7,200 parts of toluene as a polymerization solvent were fed into a pressure glass container with the inside thereof replaced with nitrogen and equipped with a stirrer, and the above catalyst liquid was added to it to start polymerization. After reacted at 45°C for 4.5 hours, the polymerization liquid was poured into a large amount of methanol to thereby completely precipitate the polymer, which was then collected by filtration, washed and thereafter dried under reduced pressure at 50°C for 18 hours to give 2,462 parts of a polymer (a).
The number-average molecular weight (hereinafter this may be abbreviated as "Mn") of the polymer (a) was 140,000; the weight-average molecular weight (hereinafter this may be abbreviated as "Mw") thereof was 502,000; the composition ratio of NB unit/EtNB unit in the polymer (a) was 71/29 (mol/mol); and the glass transition temperature (Tg) of the polymer (a) was 281°C.

### (Reference Example 2)

### (Synthesis of Norbornene Compound Addition Polymer (b))

2,027 parts of a polymer (b) was obtained in the same manner as in Example 1, for which, however, the monomers were changed to 1,175 parts of 2-norbornene (NB; molecular weight = 94) and 1, 525 parts of 5,6-dimethylbicyclo[2.2.1]hept-2-ene (DMNB; molecular weight: 122).
Mn of the polymer (b) was 117, 000; Mw thereof was 377, 000; the composition ratio of NB unit/DMNB unit in the polymer (b) was 52/48 (mol/mol); and Tg was 301°C.

### (Reference Example 3)

### (Synthesis of Norbornene Compound Addition Polymer (c))

1,800 parts of a polymer (c) was obtained in the same manner as in Example 1, for which, however, the monomers were changed to 1,650 parts of 2-norbornene (NB; molecular weight = 94) and 675 parts of methyl tetracyclo[6.2.1.1^{3,6}.0^{2,7}]dodec-9-ene-4-carboxylate (TCDMC; molecular weight = 218).
Mn of the polymer (c) was 105, 000; Mw thereof was 278, 000; the composition ratio of NB unit/TCDMC unit in the polymer (c) was 85/15 (mol/mol); and Tg was 335°C.

### (Examples 1 to 3)

A 10 % toluene solution of the polymer (a) was prepared, and, as antioxidants, 0.5 % relative to the polymer (a) of octadecyl 3-(3,5-di-t-butyl-4-hydroxyphenyl)propionate, 1.0 % relative to the polymer (a) of tris(2,4-di-t-butylphenyl) phosphite, and 0.3 % relative to the polymer (a) of a reaction product of 3-hydroxy-5,7-di-t-butyl-furan-2-one and o-xylene were added and dissolved therein. The solution (a) was cast onto a flat polytetrafluoroethylene sheet, and toluene was evaporated away at room temperature for 24 hours in an air flow, and then this was dried in vacuum at 80°C for 24 hours and at 150°C for 24 hours, thereby producing a cast film (A) having a thickness of 100 µm and having a residual solvent content of less than 500 ppm.
Similarly, cast films (B) and (C) having a thickness of 100 µm were produced from the polymers (b) and (c), respectively. The residual solvent content in the obtained cast films (A) to (C) are shown in Table 1.
Next, the cast films (A) and (B) were heat-treated in a nitrogen atmosphere at 250°C for 1 hour, and the cast film (C) was heat-treated in a nitrogen atmosphere at 280°C for 1 hour, thereby giving norbornene compound polymer films.
These norbornene compound polymer films were analyzed for the dimensional change rate between before and after heating at 200°C, between before and after dipping in PGMEA and between before and after dipping in water, and for the solvent content and the total light transmittance. The results are shown in Table 1. In Table 1, "<50" and "<500" mean "less than 50 ppm" and "less than 500 ppm", respectively. In Table 1, Tg is that of the film.

### (Example 4)

To the solution (a) of the polymer (a) prepared according to the method of Example 1, added was 5.0 % relative to the polymer (a) of dibutyl malonate (plasticizer), and dissolved.
The solution was cast onto a flat polytetrafluoroethylene sheet, then toluene was evaporated away at room temperature for 24 hours in an air flow, and thereafter this was dried in vacuum at 80°C for 1 hour and at 150°C for 1 hour, thereby producing a cast film (D) having a thickness of 100 µm and having a residual solvent content of less than 500 ppm.
Next, the cast film (D) was heat-treated in the same manner as in Example 1 to give a norbornene compound polymer film. The film was analyzed in the same manner as in Example 1, and the results are shown in Table 1.

### (Comparative Examples 1 to 3)

The cast films (A), (B) and (C) were, without a heat treatment at 250 to 280°C in a nitrogen atmosphere, analyzed for the dimensional change rate, the solvent content and the total light transmittance. The results are shown in Table 1.

### (Comparative Example 4)

The cast film (C) was heat-treated in a nitrogen atmosphere at 160°C for 1 hour. The film was analyzed for the dimensional change rate, the solvent content and the total light transmittance. The results are shown in Table 1.

### (Comparative Example 5)

A 10 % toluene solution of the polymer (a) was prepared, and, as antioxidants, 0.5 % relative to the polymer (a) of octadecyl 3-(3,5-di-t-butyl-4-hydroxyphenyl)propionate, 1.0 % relative to the polymer (a) of tris(2,4-di-t-butylphenyl) phosphite, and 0.3 % relative to the polymer (a) of a reaction product of 3-hydroxy-5,7-di-t-butyl-furan-2-one and o-xylene were added and dissolved therein. The solution was cast onto a flat polytetrafluoroethylene sheet, and toluene was evaporated away at room temperature for 24 hours in an air flow, and then this was dried in vacuum at 200°C for 1 hour, thereby producing a cast film (A') having a thickness of 100 µm. The residual solvent content in the film was 25,000 ppm.
The cast film (A') was heat-treated in a nitrogen atmosphere at 250°C for 1 hour. The film was analyzed for the dimensional change rates between before and after heating at 200°C, between before and after dipping in PGMEA and between before and after dipping in water, and for the solvent content and the total light transmittance. The results are shown in Table 1.

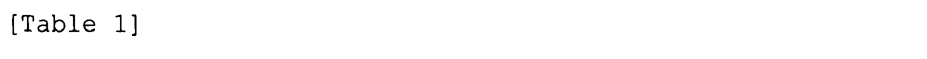

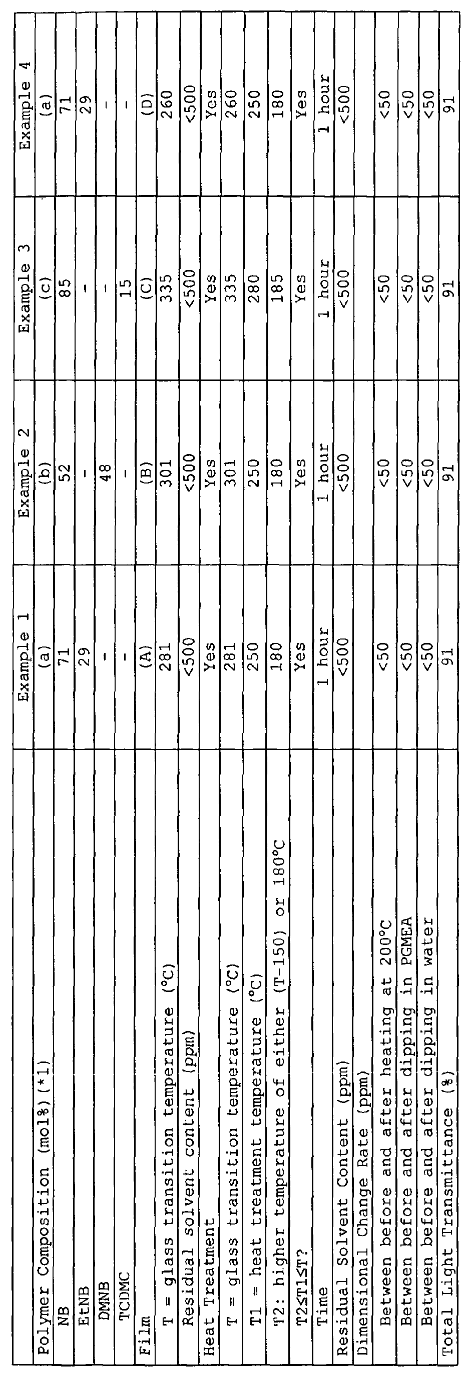

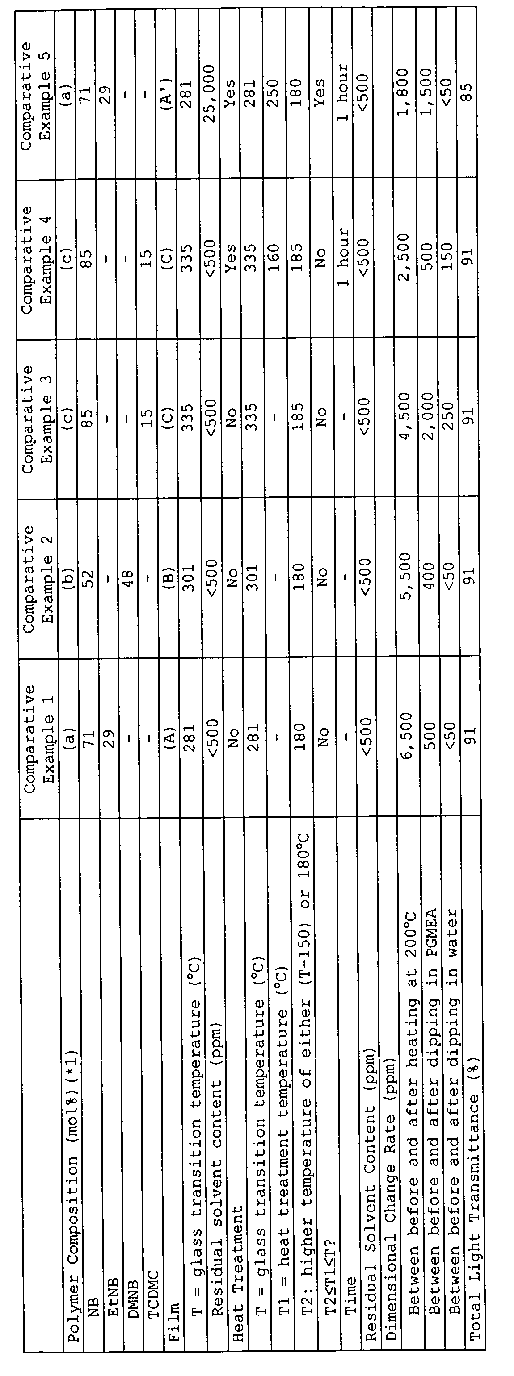

(Footnotes to Table 1)
*1: NB: bicyclo[2.2.1]hept-2-ene
EtNB: 5-ethylbicyclo[2.2.1]hept-2-ene
DMNB: 5,6-dimethylbicyclo[2.2.1]hept-2-ene
TCDMC: methyl tetracyclo[6.2.1.1^{3,6}.0^{2,7}]dodec-9-ene-4-carboxylate

Table 1 confirms the following:
The norbornene compound addition polymer films without a heat treatment at a temperature falling within a range of from the higher temperature of either (T-150)°C or 180°C to T°C (T means the glass transition temperature of the norbornene compound addition polymer) after formation of the cast films all have a large dimensional change rate both between before and after heating at 200°C and between before and after dipping in PGMEA (Comparative Examples 1 to 3), and some have a large dimensional change rate between before and after dipping in water (Comparative Example 3). It is shown that the films have a large dimensional change rate between before and after heating at 200°C, between before and after dipping in PGMEA and between before and after dipping in water, even though heat-treated, in case where the heat treatment temperature oversteps the range specifically defined in the invention (Comparative Example 4). It is also shown that, when the residual solvent content in the cast films before the heat treatment is large beyond the range specifically defined in the invention, then the films still have a large dimensional change rate either between before and after heating at 200°C or between before and after dipping in PGMEA, even though they are heat-treated within the above-mentioned temperature range specifically defined in the invention, and further that the total light transmittance of those samples lowers (Comparative Example 5).
As opposed to these, the films produced by processing cast films having a residual solvent content of not more than 5,000 ppm, at a temperature falling within a range of from the higher temperature of either (T-150)°C or 180°C to T°C (T means the glass transition temperature of the norbornene compound addition polymer) in their production process all have a small dimensional change rate between before and after heating at 200°C, between before and after dipping in PGMEA and between before and after dipping in water, and have a high total light transmittance (Examples 1 to 4).
It is shown that, in the cast films containing a plasticizer (Example 4), the residual solvent content may be reduced to at most 5,000 ppm within a shorter period of time, as compared with that in the cast films not containing a plasticizer (Examples 1 to 3).

## Claims

1. A norbornene compound addition polymer film satisfying at least either one of the following: (1) when it is heated from 25°C up to 200°C and then again cooled to 25°C, the dimensional change rate thereof between before heating and after cooling is at most 100 ppm, or (2) the dimensional change rate thereof between before and after dipping in propylene glycol monomethyl ether acetate at 25°C for 1 hour is at most 100 ppm.

2. The norbornene compound addition polymer film as claimed in claim 1, of which the dimensional change rate between before and after dipping in water at 25°C for 1 hour is at most 100 ppm.

3. The norbornene compound addition polymer film as claimed in claim 1 or 2, which has a solvent content of at most 1,000 ppm.

4. The norbornene compound addition polymer film as claimed in any one of claims 1 to 3, which contains at least one antioxidant selected from the group consisting of phenolic antioxidants, lactone-based antioxidants and phosphorus-containing antioxidants, in an amount of from 0.01 to 10 % by weight of the norbornene compound addition polymer.

5. A method for producing the norbornene compound addition polymer film of any one of claims 1 to 4, which comprises, in a process of preparing a norbornene compound addition polymer film, a step of keeping the film having a residual solvent content of at most 5,000 ppm at a temperature falling within a range of from the higher temperature of either (T-150)°C or 180°C to T°C (T means the glass transition temperature of the norbornene compound addition polymer).

6. The method for producing a norbornene compound addition polymer film as claimed in claim 5, wherein a cast film of a norbornene compound addition polymer having a residual solvent content of at most 5,000 ppm is heat-treated at a temperature falling within a range of from the higher temperature of either (T-150)°C or 180°C to T°C.

7. The method for producing a norbornene compound addition polymer film as claimed in claim 5, wherein the film is produced according to a method of subjecting the film to a thermal history within a range of from the higher temperature of either (T-150)°C or 180°C to T°C in a process of directly preparing the norbornene compound addition polymer film=without a step of forming a cast film from a norbornene compound addition polymer.

8. The method for producing a norbornene compound addition polymer film as claimed in any one of claims 5 to 7, wherein a plasticizer is used as combined in preparing the film having a residual solvent content of at most 5,000 ppm.

9. The norbornene compound addition polymer film as claimed in any one of claims 1 to 4, further laminated with a transparent conductive film.

10. Optical parts, electric insulating parts, electric/electronic parts, sealants for electronic parts, medical equipment or packaging materials comprising the norbornene compound addition polymer film of any one of claims 1 to 4 and 9.

11. Optical parts comprising a laminate of the norbornene compound addition polymer film of any one of claims 1 to 4 and 9 and a transparent substrate having a light transmittance of at least 80 % and a linear expansion coefficient of at most 50 ppm/°C.
